# FASCICULE DE BREVET EUROPEEN

(11) **EP 3 060 454 B1**
(45) Date de publication et mention de la délivrance du brevet: **31.10.2018**
(21) Numéro de dépôt: 14771335.8
(22) Date de dépôt: 22.09.2014
(51) Int. Cl.: B62D 25/06, B62D 27/02

(54) **PROCÉDÉ POUR RAIDIR UN PANNEAU GALBÉ EN TÔLE AU MOYEN D'UN PANNEAU EN CARTON**
VERFAHREN ZUR VERSTEIFUNG EINES GEKRÜMMTEN BLECHES MITTELS EINER KARTONPLATTE
METHOD FOR STIFFENING A CURVED SHEET-METAL PANEL BY MEANS OF A CARDBOARD PANEL

(30) Priorité: 22.10.2013 FR 1360291
(43) Date de publication de la demande: 31.08.2016
(73) Titulaire: PSA Automobiles SA, 78300 Poissy (FR); ADHEX TECHNOLOGIES, 21300 Chenôve (FR)
(72) Inventeur: ROBERT, Hervé, F-25200 Montbeliard (FR); GUY,Alain, F-90400 Meroux Moval (FR); FAVATA, Hervé, F-21270 Binges (FR); VION, Hervé, F-21130 Auxone (FR)
(74) Mandataire: Fosse, Danièle
(86) Numéro de dépôt international: PCT/EP2014/070124
(87) Numéro de publication internationale: WO 2015/058917

(56) Documents cités:
- EP-A1- 0 712 776
- WO-A1-01/68406
- WO-A1-2007/025707
- DE-A1- 19 529 511
- DE-A1- 19 949 643
- DE-C1- 19 632 054
- GB-A- 2 204 341
- JP-A- S58 214 473

## Description

La présente invention concerne un procédé pour raidir un panneau galbé en tôle, dans lequel on applique un panneau plan en carton sur la face intérieure concave du panneau galbé en tôle.

L'invention concerne en particulier l'application du procédé selon l'invention au raidissement d'une pièce en tôle telle que le pavillon d'un véhicule automobile.

Les pavillons des véhicules automobiles sont en général en tôle d'acier de faible épaisseur.

Du fait de la faible épaisseur de la tôle, ces pavillons ont une raideur insuffisante.

Il est par conséquent nécessaire d'augmenter la raideur de ces pavillons.

On connaît par DE 199 49 643 un renfort de pavillon de véhicule automobile constitué d'une couche de mousse en polyurethane et d'un revêtement qui est ensuite collé au pavillon. De même, dans DE 196 32 054 est décrit un renfort de pavillon de véhicule automobile comportant un renfort collé par des bandes de colle au pavillon.

Un procédé connu consiste à fixer un panneau plan en carton sur la face intérieure concave du pavillon en tôle.

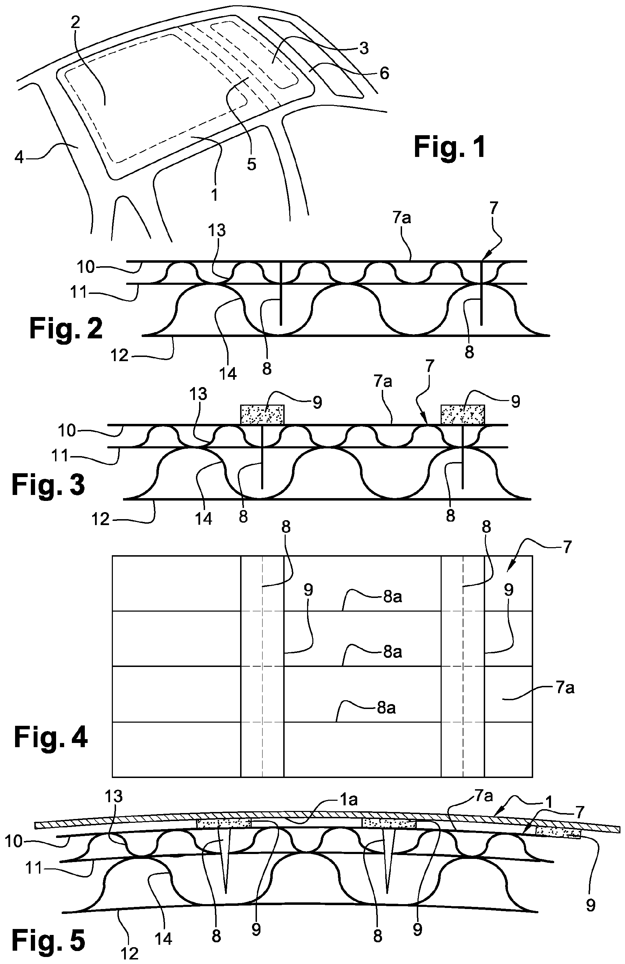

La figure 1 est une vue en perspective montrant partiellement la caisse d'un véhicule automobile.

Sous le pavillon 1 de cette caisse sont représentés en pointillés deux panneaux en carton 2, 3.

Le plus grand de ces panneaux en carton 2, 3 est fixé entre la traverse arrière 4 et la traverse du milieu 5.

L'autre panneau en carton 3 est fixé entre la traverse 5 et la traverse avant 6.

Préalablement à la pose du ou des panneaux en carton, on colle sur ceux-ci des bandes d'adhésif double face pour que ces bandes puissent adhérer au carton et à la tôle du pavillon.

Cependant, compte tenu de la raideur du panneau en carton celui-ci tend à reprendre sa position horizontale initiale.

Par conséquent, l'adhérence des bandes tend à lâcher.

De même, on constate la plupart du temps des déformations de la tôle du pavillon engendrées lors de la pose du panneau en carton.

Ces déformations nuisent à la qualité d'aspect du pavillon et sont par conséquent inacceptables.

Chacun des documents JP S58 214 473 A, DE 195 29 511 A, WO 01/68406 A et GB 2 204 341 A divulgue le montage d'un panneau raidisseur sur un panneau galbé en tôle.

Le but de la présente invention est de remédier aux inconvénients du procédé connu, ci-dessus.

Ce but est atteint, selon l'invention, grâce à un procédé pour raidir un panneau galbé en tôle dans lequel on applique un panneau plan en carton sur la face concave du panneau galbé en tôle, caractérisé par les étapes suivantes :
a) on réalise sur la face du panneau en carton, destinée à être appliquée sur la face concave du panneau en tôle, une série de découpes parallèles traversant partiellement l'épaisseur du panneau en carton,
b) on applique sur ladite face du panneau en carton une série de bandes adhésives recouvrant respectivement lesdites découpes parallèles,
c) on applique ladite face du panneau en carton pourvue desdites bandes adhésives sur ladite face concave du panneau en tôle.

Ces découpes confèrent au panneau en carton une souplesse telle que celui-ci peut lors de son application contre le panneau en tôle s'adapter à la surface galbée de celui-ci sans créer de déformation.

De plus, compte tenu des découpes, le panneau en carton n'a plus tendance à reprendre sa forme plane et les bandes ne risquent plus de se détacher du panneau en tôle.

De préférence, les bandes adhésives sont centrées sur les découpes respectives, ce qui permet de répartir, de façon équilibrée, l'adhérence des bandes de part et d'autre des découpes.

De préférence également, le panneau en carton comprend trois feuilles parallèles séparées l'une de l'autre par une feuille cannelée, les découpes traversant deux desdites feuilles parallèles ainsi que la feuille cannelée comprise entre celles-ci.

De ce fait les parties du panneau en carton restent reliées de part et d'autre des découpes, au moins grâce à la troisième feuille.

Dans le cas d'un pavillon, le panneau en tôle est sensiblement rectangulaire et est concave dans le sens de sa longueur et dans le sens de sa largeur.

Dans ce cas, on réalise sur la face concave du panneau en carton, deux séries de découpes, l'une de ces séries étant orientée dans le sens de la longueur du panneau et l'autre étant orientée dans le sens de la largeur de ce panneau.

Dans ce cas, le panneau en carton est souple dans les deux sens et par conséquent, lors de sa pose, il épouse parfaitement la concavité du panneau en tôle dans le sens de sa longueur et de sa largeur, sans engendrer de déformation de la tôle, ni risque de détachement du carton.

Dans le cas ci-dessus, de préférence, seule la série de découpes réalisée dans l'un des deux sens est recouverte par des bandes adhésives.

De préférence également, la série de découpes recouverte par des bandes adhésives est la série de découpes orientée dans le sens de la longueur du panneau en carton.

Dans une version particulièrement avantageuse l'étape c) du procédé est mise en oeuvre en plaçant le panneau en carton pourvu desdites bandes adhésives à plat dans une cuve dont le bord périphérique est appliqué de façon étanche contre la face concave du panneau en tôle et en créant dans la cuve une dépression suffisante pour que le panneau en carton s'applique contre le panneau en tôle et adhère à celui-ci grâce aux bandes adhésives.

Selon un autre aspect, l'invention concerne également l'application du procédé selon l'invention au raidissement d'une pièce en tôle d'un véhicule automobile.

Cette pièce en tôle peut être le pavillon.

Dans cette application, le carton outre sa fonction de raidir le pavillon a également une fonction acoustique vis-à-vis des bruits de roulage et l'eau de pluie, etc.

La présente invention a également pour objet un panneau raidisseur pour panneau galbé en tôle, ledit panneau raidisseur étant obtenu dans du carton et destiné à être appliqué sur la face concave du panneau galbé en tôle, caractérisé en ce qu'il comprend une série de découpes parallèles traversant partiellement l'épaisseur du panneau en carton depuis la face supérieure du panneau en carton et une série de bandes adhésives recouvrant respectivement lesdites découpes parallèles.

De préférence les bandes adhésives sont centrées sur les découpes respectives.

Avantageusement, le panneau en carton comprend trois feuilles parallèles séparées l'une de l'autre par une feuille cannelée, les découpes traversant deux feuilles parallèles ainsi que la feuille cannelée étant comprise entre celles-ci.

Dans une variante, la face supérieure du panneau en carton comporte deux séries de découpes, l'une de ces séries étant orientée dans le sens de la longueur du panneau et l'autre étant orientée dans le sens de la largeur de ce panneau. Avantageusement, seule la série de découpes réalisée dans l'un des deux sens est recouverte par des bandes adhésives. De plus, la série de découpes recouverte par des bandes adhésives est de préférence la série de découpes orientée dans le sens de la longueur du panneau en carton.

D'autres particularités et avantages de l'invention apparaîtront encore tout au long de la description ci-après.

Aux dessins annexés, donnés à titre d'exemples, non limitatifs :
- la figure 2 est une vue en coupe transversale du carton utilisé pour raidir le pavillon d'un véhicule automobile montrant la première étape du procédé selon l'invention,
- la figure 3 est une vue analogue à la figure 2 montrant une étape suivante du procédé selon l'invention,
- la figure 4 est une vue de dessus du carton représenté sur la figure 3,
- la figure 5 est une vue en coupe analogue à la figure 3 montrant le carton en position sous le pavillon d'un véhicule automobile.

Les figures 2 et 3 montrent en coupe le panneau en carton 7 avant son application sur la face intérieure concave du pavillon 1 en tôle d'un véhicule automobile.

Comme montré sur la figure 2, dans une première étape du procédé selon l'invention, on réalise sur la face 7a du panneau en carton 7, destinée à être appliquée sur la face intérieure concave du pavillon 1 en tôle, une série de découpes parallèles 8 traversant partiellement l'épaisseur du panneau en carton 7.

Dans une étape suivante, montrée par les figures 3 et 4, on applique sur la face 7a du panneau en carton 7 une série de bandes adhésives 9 recouvrant respectivement les découpes parallèles 8.

Ces bandes adhésives 9 sont de préférence centrées sur les découpes 8 (voir figure 4).

On applique ensuite (voir figure 5), la face 7a du panneau en carton pourvue des bandes adhésives 9 sur la face intérieure concave 1a du pavillon en tôle 1.

Dans l'exemple illustré par les figures 2, 3 et 5, le panneau en carton 7 comprend trois feuilles parallèles 10, 11, 12 séparées l'une de l'autre par une feuille cannelée 13, 14.

De plus, les découpes 8 traversent deux des feuilles parallèles, à savoir les feuilles 10, 11, ainsi que la feuille cannelée 13 comprise entre celles-ci.

Le panneau en tôle 1 d'un véhicule automobile est sensiblement rectangulaire et est concave dans le sens de sa longueur et dans le sens de sa largeur.

Dans ce cas, on réalise sur la face 7a du panneau en carton 7, deux séries de découpes 8 et 8a.

La série de découpes 8 est orientée dans le sens de la longueur du panneau 7 et l'autre série de découpes 8a est orientée dans le sens de la largeur de ce panneau 7, comme montré sur la figure 4.

Dans cet exemple, seule la série de découpes 8 réalisée dans l'un des deux sens est recouverte par des bandes adhésives 9.

En outre, la série de découpes 8 recouverte par les bandes adhésives 9 est la série de découpes orientée dans le sens de la longueur du panneau en carton 7.

L'étape du procédé, telle qu'illustrée par la figure 5, est mise en oeuvre de préférence en plaçant le panneau en carton 7 pourvu des bandes adhésives 9 à plat dans une cuve (non représentée) dont le bord périphérique est appliqué de façon étanche contre la face concave 1a du pavillon en tôle 1 et en créant dans la cuve une dépression suffisante pour que le panneau en carton 7 s'applique contre le pavillon en tôle 1 et adhère à celui-ci grâce aux bandes adhésives 9.

On voit sur la figure 5, que lors de cette étape, le panneau en carton 7 épouse la surface concave du pavillon 1 grâce aux découpes 8 et 8a.

On voit en effet sur cette figure 5 que les découpes 8 peuvent s'ouvrir du fait de la concavité du pavillon du fait de l'élasticité des bandes adhésives 9 qui s'aplatissent entre le pavillon 1 et le panneau en carton du fait des efforts mis en oeuvre.

Ainsi, l'application du panneau en carton 7 n'exerce aucun effort excessif sur le pavillon 1 et celui-ci ne subit aucun dommage lors de la mise en oeuvre du procédé selon l'invention.

Bien entendu, l'invention n'est pas limitée au raidissement des pavillons en tôle de véhicules automobiles, mais peut s'appliquer au raidissement de tout panneau galbé en tôle.

## Revendications

1. Procédé pour raidir un panneau galbé en tôle (1) dans lequel on applique un panneau plan en carton (7) sur la face concave (1a) du panneau galbé en tôle (1), **caractérisé par** les étapes suivantes :
a) on réalise sur la face (7a) du panneau en carton (7), destinée à être appliquée sur la face concave (1a) du panneau en tôle (1), une série de découpes parallèles (8) traversant partiellement l'épaisseur du panneau en carton (7),
b) on applique sur ladite face (7a) du panneau en carton (7) une série de bandes adhésives (9) recouvrant respectivement lesdites découpes parallèles (8),
c) on applique ladite face (7a) du panneau en carton pourvue des bandes adhésives (9) sur la face (1a) concave du panneau en tôle (1).

2. Procédé selon la revendication 1, **caractérisé en ce que** les bandes adhésives (9) sont centrées sur les découpes (8) respectives.

3. Procédé selon les revendications 1 ou 2, **caractérisé en ce que** le panneau en carton (7) comprend trois feuilles parallèles (10, 11, 12) séparées l'une de l'autre par une feuille cannelée (13, 14), les découpes (8) traversant deux desdites feuilles parallèles ainsi que la feuille cannelée (13) comprise entre celles-ci.

4. Procédé selon l'une des revendications 1 à 3, dans lequel le panneau en tôle (1) étant sensiblement rectangulaire et concave dans le sens de sa longueur et dans le sens de sa largeur, **caractérisé en ce qu'**on réalise sur ladite face (7a) du panneau en carton (7) destinée à être appliquée sur la face concave (1a) du panneau en tôle (1), deux séries de découpes, l'une (8) de ces séries étant orientée dans le sens de la longueur du panneau (7) et l'autre (8a) étant orientée dans le sens de la largeur de ce panneau (7).

5. Procédé selon la revendication 4, **caractérisé en ce que** seule la série de découpes (8) réalisée dans l'un des deux sens est recouverte par des bandes adhésives (9).

6. Procédé selon la revendication 5, **caractérisé en ce que** la série de découpes (8) recouverte par des bandes adhésives (9) est la série de découpes orientée dans le sens de la longueur du panneau en carton (7).

7. Procédé selon l'une des revendications 1 à 6, **caractérisé en ce que** l'étape c) du procédé est mise en oeuvre en plaçant le panneau en carton (7) pourvu desdites bandes adhésives (9) à plat dans une cuve dont le bord périphérique est appliqué de façon étanche contre la face concave (1a) du panneau en tôle (1) et en créant dans la cuve une dépression suffisante pour que le panneau en carton (7) s'applique contre le panneau en tôle (1) et adhère à celui-ci grâce aux bandes adhésives (9).

8. Panneau raidisseur pour panneau galbé en tôle (1), ledit panneau raidisseur étant obtenu dans du carton et destiné à être appliqué sur la face concave (1a) du panneau galbé en tôle (1), **caractérisé en ce qu'**il comprend une série de découpes parallèles (8) traversant partiellement l'épaisseur du panneau en carton (7) depuis la face supérieure (7a) du panneau en carton (7) et une série de bandes adhésives (9) recouvrant respectivement lesdites découpes parallèles (8).

9. Panneau raidisseur selon la revendication 8, **caractérisé en ce que** les bandes adhésives (9) sont centrées sur les découpes (8) respectives.

10. Panneau raidisseur selon l'une quelconque des revendications 8 ou 9, **caractérisé en ce que** le panneau en carton (7) comprend trois feuilles parallèles (10, 11, 12) séparées l'une de l'autre par une feuille cannelée (13, 14), les découpes (8) traversant deux desdites feuilles parallèles ainsi que la feuille cannelée (13) étant comprise entre celles-ci.

## Patentansprüche

1. Verfahren zum Versteifen einer gewölbten Blechtafel (1), wobei eine flache Pappetafel (7) auf der konkaven Fläche (1a) der gewölbten Blechtafel (1) angelegt wird, **gekennzeichnet durch** die folgenden Schritte:
a) Herstellen auf der Fläche (7a) der Pappetafel (7), die dazu bestimmt ist, auf die konkave Fläche (1a) der Blechtafel (1) angelegt zu werden, einer Reihe paralleler Schnitte (8), die die Stärke der Pappetafel (7) teilweise durchqueren,
b) Anlegen auf der Fläche (7a) der Pappetafel (7) einer Reihe von Klebebändern (9), die jeweils die parallelen Schnitte (8) bedecken,
c) Anlegen der Fläche (7a) der Pappetafel, die mit den Klebebändern (9) versehen ist, auf der konkaven Fläche (1a) der Blechtafel (1).

2. Verfahren nach Anspruch 1, **dadurch gekennzeichnet, dass** die Klebebänder (9) auf den jeweiligen Schnitten (8) zentriert sind.

3. Verfahren nach den Ansprüchen 1 oder 2, **dadurch gekennzeichnet, dass** die Pappetafel (7) drei parallele Blätter (10, 11, 12) umfasst, die voneinander durch ein geriffeltes Blatt (13, 14) getrennt sind, wobei die Schnitte (8) die parallelen Blätter sowie das geriffelte Blatt (13), das zwischen ihnen enthalten ist, durchqueren.

4. Verfahren nach einem der Ansprüche 1 bis 3, wobei die Blechtafel (1) im Wesentlichen rechteckig und in die Richtung ihrer Länge und in die Richtung ihrer Breite konkav ist, **dadurch gekennzeichnet, dass** auf der Fläche (7a) der Pappetafel (7), die dazu bestimmt ist, auf der konkaven Fläche (1a) der Blechtafel (1) angelegt zu werden, zwei Reihen von Schnitten hergestellt werden, wobei eine (8) dieser Reihen in die Richtung der Länge der Tafel (7) ausgerichtet ist, und die andere (8a) in die Richtung der Breite dieser Tafel (7) ausgerichtet ist.

5. Verfahren nach Anspruch 4, **dadurch gekennzeichnet, dass** nur die Reihe von Schnitten (8), die in die eine der zwei Richtungen hergestellt wird, von den Klebebändern (9) bedeckt wird.

6. Verfahren nach Anspruch 5, **dadurch gekennzeichnet, dass** die Reihe von Schnitten (8), die von Klebebändern (9) bedeckt ist, die Reihe von Schnitten ist, die in die Richtung der Länge der Pappetafel (7) ausgerichtet ist.

7. Verfahren nach einem der Ansprüche 1 bis 6, **dadurch gekennzeichnet, dass** der Schritt c) des Verfahrens, umgesetzt wird, indem die Pappetafel (7), die mit den Klebebändern (9) versehen ist, flach in einer Vertiefung, deren umfänglicher Rand dicht gegen die konkave Fläche (1a) der Blechtafel (1) angelegt ist, und indem in der Wanne ein ausreichendes Vakuum geschaffen wird, damit die Pappetafel (7) gegen die Blechtafel (1) gedrückt wird und an dieser Dank den Klebebändern (9) haftet.

8. Versteifungstafel für gewölbte Blechtafel (1), wobei die Versteifungstafel aus Pappe erhalten wird und dazu bestimmt ist, auf der konkaven Fläche (1a) der gewölbten Blechtafel (1) angelegt zu sein, **dadurch gekennzeichnet, dass** sie eine Reihe paralleler Schnitte (8), die die Stärke der Pappetafel (7) von der oberen Fläche (7a) der Pappetafel (7) teilweise durchquert, und eine Reihe von Klebebändern (9), die jeweils die parallelen Schnitte (8) bedecken, umfasst.

9. Versteifungstafel nach Anspruch 8, **dadurch gekennzeichnet, dass** die Klebebänder (9) auf den jeweiligen Schnitten (8) zentriert sind.

10. Versteifungstafel nach einem der Ansprüche 8 oder 9, **dadurch gekennzeichnet, dass** die Pappetafel (7) drei parallele Blätter (10, 11, 12) umfasst, die voneinander durch ein geriffeltes Blatt (13, 14) getrennt sind, wobei die Schnitte (8) zwei der parallelen Blätter sowie das geriffelte Blatt (13), das zwischen diesen enthalten ist, durchqueren.

## Claims

1. Method for stiffening a curved sheet-metal panel (1) in which a flat cardboard panel (7) is applied to the concave face (1a) of the curved sheet-metal panel (1), **characterised by** the following steps:
a) a series of parallel cuts (8) that pass partially through the thickness of the cardboard panel (7) are made in that face (7a) of the cardboard panel (7) that is intended to be applied to the concave face (1a) of the sheet-metal panel (1),
b) a series of adhesive strips (9) that each cover said parallel cuts (8) are applied to said face (7a) of the cardboard panel (7),
c) said face (7a), provided with said adhesive strips (9), of the cardboard panel is applied to the concave face (1a) of the sheet-metal panel (1).

2. Method according to claim 1, **characterised in that** the adhesive strips (9) are centred on the respective cuts (8).

3. Method according to claims 1 or 2, **characterised in that** the cardboard panel (7) comprises three parallel sheets (10, 11, 12) separated from one another by a corrugated sheet (13, 14), the cuts (8) passing through two of said parallel sheets as well as the corrugated sheet (13) between the latter.

4. Method according to one of claims 1 to 3, wherein the sheet-metal panel (1) being substantially rectangular and concave in the direction of its length and in the direction of its width, **characterised in that** on said face (7a) of the cardboard panel (7) intended to be applied to the concave face (1a) of the sheet-metal panel (1), two series of cuts are made, one (8) of these series being oriented in the direction of the length of the panel (7) and the other (8a) being oriented in the direction of the width of this panel (7).

5. Method according to claim 4, **characterised in that** only the series of cuts (8) made in one of the two directions is covered by adhesive strips (9).

6. Method according to claim 5, **characterised in that** the series of cuts (8) covered by adhesive strips (9) is the series of cuts oriented in the direction of the length of the cardboard panel (7).

7. Method according to one of claims 1 to 6, **characterised in that** the step c) of the method is implemented by placing the cardboard panel (7) provided with said adhesive strips (9) flat in a tank of which the peripheral edge is applied in a sealing manner against the concave face (1a) of the sheet-metal panel (1) and by creating in the tank enough negative pressure so that the cardboard panel (7) is applied against the sheet-metal panel (1) and adheres to the latter thanks to the adhesive strips (9).

8. Stiffening panel for a curved sheet-metal panel (1), said stiffening panel being obtained in the cardboard intended to be applied on the concave face (1a) of the curved sheet-metal panel (1), **characterised in that** it comprises a series of parallel cuts (8) passing partially through the thickness of the cardboard panel (7) from the upper face (7a) of the cardboard panel (7) and a series of adhesive strips (9) respectively covering said parallel cuts (8).

9. Stiffening panel according to claim 8, **characterised in that** the adhesive strips (9) are centred on the respective cuts (8).

10. Stiffening panel according to any of claims 8 or 9, **characterised in that** the cardboard panel (7) comprises three parallel sheets (10, 11, 12) separated from one another by a corrugated sheet (13, 14), the cuts (8) passing through two of said parallel sheets as well as the corrugated sheet (13) between the latter.
